# EUROPÄISCHE PATENTSCHRIFT

(11) **EP 0 954 832 B1**
(45) Veröffentlichungstag und Bekanntmachung des Hinweises auf die Patenterteilung: **06.02.2002**
(21) Anmeldenummer: 97952951.8
(22) Anmeldetag: 17.12.1997
(51) Int. Cl.: G07D 7/00

(54) **WERT- UND SICHERHEITSERZEUGNIS MIT MINDESTENS EINEM SICHERHEITSMERKMAL, UND VERFAHREN ZUR DETEKTION DER SICHERHEITSMERKMALE**
VALUE AND SECURITY PRODUCT WITH AT LEAST ONE SECURITY CHARACTERISTIC, AND METHOD FOR DETECTION OF THE SECURITY CHARACTERISTICS
PRODUIT DE VALEUR ET DE SECURITE PRESENTANT AU MOINS UNE CARACTERISTIQUE DE SECURITE, ET PROCEDE DE DETECTION DES CARACTERISTIQUES DE SECURITE

(30) Priorität: 20.12.1996 DE 19654607
(43) Veröffentlichungstag der Anmeldung: 10.11.1999
(73) Patentinhaber: BUNDESDRUCKEREI GmbH, D-10958 Berlin (DE)
(72) Erfinder: AHLERS, Benedikt, D-10997 Berlin (DE); GUTMANN, Roland, D-12349 Berlin (DE); FRANZ-BURGHOLZ, Arnim, D-10967 Berlin (DE); SCHMIDT, Wolfgang, D-13593 Berlin (DE); PAUGSTADT, Ralf, 10115 Berlin (DE); KROKKER, Hans-Konrad, 12309 Berlin (DE)
(74) Vertreter: Riebling, Peter, Dr.-Ing.
(86) Internationale Anmeldenummer: EP9707082
(87) Internationale Veröffentlichungsnummer: WO9828717

(56) Entgegenhaltungen:
- EP-A- 0 702 339
- EP-A- 0 734 713
- DE-A- 4 344 552
- GB-A- 565 708
- US-A- 5 063 163
- US-A- 5 409 839

## Beschreibung

Die Erfindung bezieht sich auf Wert- und Sicherheitserzeugnisse mit mindestens einem Sicherheitsmerkmal, insbesondere Wertdokument in Form von Banknoten, Scheckformularen, Aktien, Personaldokumenten, Kredit- und Scheckkarten u.dgl., sowie auf ein Verfahren zu seiner Herstellung und Verfahren zur Detektion der Sicherheitsmerkmale.

Zwar beschreibt die US 5,409,839 zwar ein Verfahren, von dem Wertdokumente betroffen sind, die unter Verwendung eines Perfluorocarbon als Markierungsstoff (PFC) beschrieben ist. In dieser Druckschrift wird ein Verfahren beschrieben, um illegale Drogen, Ernteerzeugnisse und chemische Verbindungen sowie Währungen zu erkennen. Derartige Markierungsstoffe liegen in microverkapselter Form vor und werden z.B. auf Erntefelder vom Flugzeug abgeworfen, um bestimmte Ernten (auch illegaler Natur) zu markieren. Diese Markierungsstoffe werden ebenfalls für Umweltzwecke und gesundheitliche Zwecke eingesetzt. Ein weiteres Anwendungsgebiet aus der Beschreibung dieser Druckschrift ist der Einsatz zur Markierung von Geldscheinen, welche z.B. bei Entführungsfällen zur späteren Wiedererkennung damit gekennzeichnet werden können.

Es wird bei Wert- und Sicherheitserzeugnissen, insbesondere Wertdokumenten, verlangt, Merkmale auf- bzw. einzubringen, die den Nachweis ihrer Echtheit, d.h. ihrer Originalität und Authentizität, ermöglichen. Die Sicherheitsmerkmale sollen möglichst untrennbar mit dem zu autorisierenden Erzeugnis verbunden sein und/oder Eigenschaften aufweisen, die schwer zu reproduzieren sind. Es ist eine Vielzahl von Sicherheitsmerkmalen bei Wertdokumenten bekannt, wie fluoreszierende Streifen, Hologramme u. dgl., deren Herstellung und Anwendung allgemein bekannt ist. Besondere Bedeutung hat hierbei die maschinelle Erkennbarkeit der Sicherheitsmerkmale.

Als Sicherheitsmerkmale werden auch Spezialfarben mit spektralen Besonderheiten oder mit magnetischen Eigenschaften oder Temperaturabhängigkeiten eingebracht, wie thermochrome Farben. Auch werden Barcode eingesetzt, bei denen die Reflextionsunterschiede der Oberfläche ausgenutzt werden, oder es werden Gitterstrukturen oder auch Folienantennen zur Ausnutzung der Resonanzfrequenz in einem Schwingkreis als Sicherheitsmerkmale verwendet.

Den bekannten maschinell lesbaren Sicherheitsmerkmalen ist gemeinsam, daß diese sich im Grad der Fälschungssicherheit zwar unterscheiden, aber generell mit unterschiedlichem Aufwand reproduzierbar sind und meist optisch sichtbar gemacht werden können und somit keine ausreichende Sicherheit gegen Fälschungen gewährleisten. Beispiele für derartige Sicherheitsmerkmale sind beschrieben in der EP 0 440 045 B1 (optisch variable Elemente, z. B. Hologramme), DE 4343387 A1 (visuell identifizierbar, optische Elemente), EP 0683471 A1 und De 3116257 C2 (magnetische Elemente), DE 3121484 C2, DE 3121523 C2 (optische, insbesondere luminiszente Elemente) und DE 4344552 A1 (pulverförmiger Merkmalsstoff mit besonderen physikalischen Eigenschaften).

Der Erfindung liegt von daher die Aufgabe zugrunde, ein Wert- oder Sicherheitserzeugnis mit Sicherheitsmerkmalen zu schaffen, bei denen die Fälschungssicherheit wesentlich verbessert ist.

Zu Lösung dieser Aufgabe sieht die Erfindung gemäß Anspruch 1 ein Werterzeugnis und oder Sicherheitserzeugnis und nach dem Anspruch 11 ein Verfahren vor, wonach das Sicherheitsmerkmal aus einer gasförmig zu detektierenden Substanz besteht. Die gasförmige Substanz ist ein Merkmalstoff der den Nachweis der Echtheit des Wert- und Sicherheitserzeugnisses, d. h. dessen Originalität und/oder Authentizität, mit sehr großer Sicherheit ermöglicht, wodurch die Fälschungssicherheit des erfindungsgemäßen Wert- und Sicherheitserzeugnisses wesentlich verbessert ist. Das Sicherheitsmerkmal aus einer gasförmigen Substanz ist in der Gasphase als gasförmiger Stoff oder Stoffgemisch detektierbar. Es gibt keine Hinweise auf die zugrundeliegende Sicherheitseigenschaften, wie diese z. B. bei Barcodes, Hologrammen oder Folienantennen offenbart werden.

Das erfindungsgemäße Sicherheitsmerkmal der gasförmig zu detektierenden Substanz kann sowohl ohne weitere Hilfsmittel der menschlichen Wahrnehmung zugänglich sein als auch derart konzipiert werden daß es nicht über die menschliche Nase wahrnehmbar ist und ausschließlich durch bekannte elektronische Nasen oder sonstige instrumentelle, analytische Methoden detektiert werden kann. Das Sicherheitsmerkmal kann passiv sein, so daß es mit menschlichen Sinnesorganen nicht zu erkennen ist. Es kann aber auch aktiv sein, wobei eine gasförmige Komponente kontinuierlich aus dem Wertdokument freigesetzt wird. Zur Erhöhung der Fälschungssicherheit können auch passive und aktive Sicherheitsmerkmale nebeneinander eingesetzt werden. Ohne Kenntnis der Verifikationstechnologie der gasförmig zu detektierenden Substanz gibt es keinen Hinweis auf das eingebrachte Sicherheitsmerkmal und damit keinen Ansatz für die vollständige Nachahmung des Wert- und Sicherheitserzeugnisses einschließlich dessen Sicherheitsmerkmal in Form der gasförmig zu detektierenden Substanz. Wesentlich ist, daß das Sicherheitsmerkmal der gasförmig zu detektierenden Substanz mit optischen Mitteln oder Verfahren nicht nachweisbar und visuell nicht wahrnehmbar ist.

Das Sicherheitsmerkmal der gasförmigen Substanz kann im festen, flüssigen oder gasförmigen Aggregatzustand vorliegen. Im Falle einer festen oder flüssigen Komponente muß diese zersetzt oder unzersetzt in den gasförmigen Zustand überführbar sein oder einen geeigneten Dampfdruck (Siedepunkt) besitzen, so daß diese Komponenten zumindest teilweise in dem gasförmigen Zustand vorliegen. Das Sicherheitsmerkmal der gasförmig zu detektierenden Substanz kann als gasförmiges Produkt bakterieller oder mikrobieller Prozesse generiert und somit zur Detektion ausgenutzt werden.

Die erfindungsgemäße gasförmige Substanz als Sicherheitsmerkmal kann modular aufgebaut sein, d.h. aus einer einzigen chemischen Verbindung oder auch aus einem komplexen Gemisch mehrerer chemischer Verbindungen bestehen. Ein eigens als Sicherheitsmerkmal konzipiertes Gemisch chemischer Verbindungen, die zur Detektion als Substanzgemisch gasförmig nebeneinander vorliegen, wird auch Fingerprint genannt, da dieser charakteristisch, qualitativ und quantitativ aus chemischen Verbindungen zusammengesetzt ist und sich dadurch auszeichnet, daß ein Substanzgemisch als Sicherheitsmerkmal schwer zu reproduzieren ist. Selbst bei Kenntnis der Sicherungseigenschaften würden die Reproduktion dieser Eigenschaften und damit der Zugriff auf die eingesetzten Verbindungen Fälschungen unmöglich machen.

Die gasförmige Substanz als erfindungsgemäßes Sicherheitsmerkmal kann integraler Bestandteil des Wert- und Sicherheitserzeugnisses sein, wobei die gasförmig zu detektierende Substanz in jeder Basiskomponente des Werterzeugnisses in beliebigen Aggregatzuständen enthalten sein kann. Hierbei können die am Herstellungsprozeß der Ausgangsmaterialien, wie Papier, Kunststoff u.dgl.,sowie des gesamten Werterzeugnisses beteiligten chemischen Verbindungen, z.B.Lösungsmittel-Gemische, als Sicherheitsmerkmale dienen. Die gasförmige Substanz kann dann als erfindungsgemäßes Sicherheitsmerkmal dienen, wenn zu den intrinsischen, d.h. von den Ausgangsmaterialien stammenden, eine oder mehrere weitere chemische Verbindungen zugesetzt werden.

Der sogenannte Fingerprint, also das Sicherheitsmerkmal aus einem gasförmigen Substanzgemisch, kann aus einer Matrix gasförmig zu detektierender Verbindungen bestehen, die sich in gasförmiger Form kombiniert aus allen Ausgangsmaterialien des Wertdokumentes charakteristisch zusammensetzt oder durch Alterung, Lagerung, Zerfallsprozesse der eingesetzten Materialien des Wertdokumentes u.a. generiert wird.

Die gasförmige Substanz als erfindungsgemäße Sicherheitsmerkmal kann in einer beliebigen oder auch quantitativen Konzentration im Werterzeugnis enthalten sein oder zugesetzt werden, wobei beim Zusatz der gasförmigen Substanz neben der chemischen Charakteristik der Verbindung bzw. des Gemisches die Konzentration der jeweiligen Komponenten in der Gasphase als zusätzlicher Parameter für die Erhöhung der Sicherheit dienen kann.

Als chemische Verbindungen, die im Sinne einer gasförmigen Substanz als erfindungsgemäßes Sicherheitsmerkmal anzuwenden sind, gelten Verbindungen, die partiell gasförmig vorliegen oder in die Gasphase überführt werden können, wie z.B. organische Lösungsmittel, natürliche Duftstoffe bzw. Duftgemische, Parfumöle, Klebstoffe, Polymere, Gase, synthetische, leichtflüchtige organische Verbindungen,polare Verbindungen, wie Alkohole und Ketone, Aldehyde, unpolare Verbindungen, wie z.B.Kohlenwasserstoffe, oxidierbare und reduzierbare sowie saure Gase, z.B. SO₂ und NO₂ u.dgl..

Die erfindungsgemäßen gasförmigen Sicherheitsmerkmale können Riechstoffe aus natürlichen Rohstoffen, wie z.B. synthetische Verbindungen aus cyclischen Monoterpenen oder acyclische Riechstoffe der Monoterpenreihe sein. Riechstoffe aus petrochemischer Gewinnung, wie z.B. Osoprenderivate und Derivate des Isobutylen oder 3-Methyl-1-buten-2-ol, Veilchenriechstoffe und Rosenketone (Jonone) und etherische Öle. Typischerweise sind Riechstoffe hydrobe und polare Verbindungen mit Molekulargewichten bis ca.300 Da. Lösungsmittel wie Xylole, Toluol, Phenole etc. kommen als Sicherheitsmerkmal-Stoffe in Betracht.

Weitere Riechstoffe sind flüchtige Abbauprodukte ungesättigter Fettsäuren, Pyrazine, Terpen- und Sesquiterpenderivate, gesättigte und ungesättigte aliphatische Aromastoffe, etherische Öle, Furane, Pyrazine, Pyrrole, Oxazole, Thiazole, Thiophene, Amine, Pyrine, Thiole etc.. (G.H.Dodd, P.N.Barlett, J.W. Gardner, Sensors and Sensory Systems for an elctronic Nose, NATO ASI Series E: Applied Sciences, Vol.212, Kluwer, Dordrecht, 1992,Ch.1).

Ebenso können als Sicherheitsmerkmal-Stoffe Pheromone (Signal- und Lockstoffe) als in äußerst geringen Konzentrationen wirksame Stoffe eingesetzt werden, die der Verständigung von Organismen einer Art dienen. Vorteilhaft beim Einsatz von Pheromonen als Sicherheitsmerkmal-Stoff ist der Zugriff Dritter auf diese chemisch komplex aufgebauten Riechstoffe und daß diese in der Regel durch die menschliche Nase nicht wahrgenommen werden. Ein umfassender Überblick über Riechstoffe wird in dem Buch "Riechstoffe und Geruchsinn, die molekulare Welt der Düfte" G.Ohloff, Springer Verlag Berlin 1990 gegeben.

Zur weiteren Erhöhung der Sicherheit der Werterzeugnisse sollen neben dem erfindungsgemäßen Sicherheitsmerkmal auch flüchtige oder gasförmig freisetzbare Verbindungen der Trägermaterialien oder Druckfarben herangezogen werden. Die gasförmigen Sicherheitsmerkmale können schon in Papier-Additiven enthalten sein, z.B.im Latex, das u.a. Butadiene, Styren, Cyclohexan etc. enthält.

Tiefdruck-, Flexodruck und andere schnelltrocknenden Farben enthalten flüchtige Lösungsmittel. Wichtige Lösungsmittel für Druckfarben sind Alkohole, Mineralöle, Ester und Xylole und Toluole. Somit weisen die Druckfarben a priori einen charakteristischen Fingerprint auf, zusammengesetzt aus den vorhandenen, flüchtigen Komponenten, der zusammen mit zusätzlichen Sicherheitsmerkmal-Stoffen für die Detektion ausgenutzt werden kann.

Auch Bindemittel, die in den Druckfarben eingesetzt werden, weisen häufig einen charakteristischen Eigengeruch auf, der zusätzlich ausgenutzt werden kann. Hierbei setzen sich die Bindemittel in der Regel aus Öl-, Harz- und Bitumenfirnissen zusammen, die wiederum oder komplexe Matrix aufweisen können (Naturöle und synthetische Öle, Harze etc.). Analoges gilt für weitere Farben und Papieradditive.

Die gasförmige Substanz als erfindungsgemäßes Sicherheitsmerkmal kann auch in Form mikroverkapselter Gase, Flüssigkeiten oder Festkörper im Werterzeugnis integriert sein, so daß eine Freisetzung in den gasförmigen Zustand durch Energiezufuhr und damit verbundenes Aufbrechen der Mikrokapseln erfolgt. Je nach Art und Beschaffenheit der Mikroverkapselung kann die Energieschwelle zur Öffnung der Kapseln maßgeschneidert werden, so daß diese gezielt durch geeignete Energiequellen geöffnet und damit das Sicherheitsmerkmal freigesetzt werden können. Ein weiterer Vorteil in der Mikroverkapselung besteht darin, daß die Langzeitstabilität erhöht wird und das Sicherheitsmerkmal punktuell auf oder in den Werterzeignissen dosiert werden kann.

Eine bei der Ausführung der Mikroverkapselung notwendige Entscheidung ist die Auswahl des Gehaltes an Sicherheitsmerkmal-Stoff, z.B.einem Duftöl, in der Kapsel. Es wird im allgemeinen eine Mischung des Sicherheitsmerkmal-Stoffes mit einer geruchlosen hochsiedenden Substanz verkapselt. Letztere wirkt bei der Generierung des Sicherheitsmerkmal-Stoffes als sogenannter Retarder, der für eine länger anhaltende Freisetzung sorgt. Eine analoge Vorgehensweise kann aus beim einfachen Zusatz von Duftstoffen z.B. zu Druckfarben angewendet werden.

Es ist zwar z.B. aus DE 19511780 A1 und DE 9419231 U1 bekannt, daß mikroverkapselte Duftstoffe, insbesondere solche mit aromatischen Parfumölen, bei Datenträgern eingesetzt werden, wobei zumindest ein Teil der Mikrokapseln an der Oberfläche der Beschichtung zugänglich ist. Derartige Datenträger werden jedoch nur zu Werbezwecken und einer produktbegleitenden Vermarktung verwendet. Die verkapselten Duftstoffe dienen hierbei nicht als Sicherheitsmerkmale.

Die gasförmige Substanz als erfindungsgemäßes Sicherheitsmerkmal kann in gasförmiger Form in porösen Trägermaterialien, wie Sintergesteinen, Zeolithen u.dgl. oder molekularen Käfig-Verbindungen (Clathraten) oder weiteren supramolekularen Verbindungen gespeichert und in dieser Form auf oder in das Wertdokument eingebracht werden. Es kann auch kovalent an einen Träger z.B. an das Wertpapier oder die auf dieses aufgebrachte Druckfarbe, Folie etc. gebunden werden.

Die gasförmig detektierbare Substanz als erfindungsgemäßes Sicherheitsmerkmal kann auch in einem festen, halbfesten oder stabilisierten, flüssigen Zustand vorliegen und in einem drucktechnischen Prozeß, wie z.B. Offset, Tiefdruck, Siebdruck o.dgl., durch non-impact-Drucktechniken, wie z.B. Ink-Jet, durch Imprägnieren, Vakuum-Techniken (sputtern), elektrochemische Abscheidung, Polymerisation u.dgl. auf das Wertdokument aufgebracht werden.

Das erfindungsgemäße gasförmig detektierbare Sicherheitsmerkmal kann als gasförmige Komponente kontinuierlich oder auch gleichzeitig durch diskontonuierliche, erzwungene Emission gasförmiger Komponenten zusammengesetzt werden, wie z.B. die Freisetzung aus Mikrokapseln.

Das erfindungsgemäße Sicherheitsmerkmal kann dadurch generiert werden, daß durch gezielte Energiezufuhr chemische Verbindungen, die auf oder in dem Werterzeugnis enthalten sind, fragmentiert werden und anschließend als niedermolekulare Verbindungen in die Gasphase übergehen. Hierbei kann eine ausgewählte, spezielle Energieschwelle zur Freisetzung und zur zusätzlichen Erhöhung der Sicherheit dienen.

Das gasförmige Sicherheitsmerkmal kann dadurch freigesetzt werden, daß es optisch, z.B. laser-induziert, durch punktuelle Erwärmung, durch mechanisches Reiben oder durch dadurch bedingtes Aufbrechen von verkapselten Sicherheitsmerkmalen oder durch elektromagnetische Felder aktiviert und freigesetzt wird.

Ferner kann das Sicherheitsmerkmal durch Zugabe von chemischen Reagenzien zu dem Werterzeugnis in Folge einer chemischen Umsetzung gasförmig generiert werden, so daß nur bei Kenntnis der zusätzlichen Chemikalien das Sicherheitsmerkmal erkannt werden kann.

Es werden bisher bei vielen Anwendungen menschlische Sinneswahrnehmungen nachgeahmt, ergänzt und automatisiert, z.B. im Bereich des Umweltschutzes, bei der Produktionskontrolle oder bei Alarmmeldern. Während es bereits elektronische Geräte für Sehen, Hören und/oder Fühlen gibt, sind solche für das Riechen zwar bereits entwickelt, aber noch sehr unvollkommen, und finden auch bisher keine Anwendung für die Kontrolle und Erkennung von Sicherheitsmerkmalen aus einer gasförmigen Substanz auf Werterzeugnissen.

Prinzipiell können zur Überprüfung der Echtheit eines gasförmigen Sicherheitsmerkmals instrumentelle, analytische Methoden eingesetzt werden, wie z.B. Massenspektroskopie und Gaschromatographie. Allen diesen Methoden ist jedoch gemeinsam, *das* sie sehr kostenintensiv sind und in den meisten Fällen nicht vor Ort, sondern off-line in Labors durchgeführt werden müssen. Daneben werden olfaktorische Überprüfungen von speziell ausgebildeten Prüfern in speziellen Räumen unter definierten Bedingungen durchgeführt.

Erfindungsgemäß wird ferner die Detektion gasförmiger Komponenten mittels chemischer Sensoren ausgenutzt, die vom Werterzeugnis freigesetzt oder emittiert werden. Somit stellen Gassensor-Systeme eine kostengünstige Variante dar, die im Hinblick auf eine Sicherheitsanwendung maßgeschneidert und miniaturisiert werden kann und als portables Gerät zur Kontrolle vor Ort eingesetzt werden kann. Die Ausnutzung der Detektion gasförmiger Komponenten als Sicherheitsmerkmal-Stoff mittels chemischer Sensoren, freigesetzt oder emittiert von einem Werterzeugnis, ist bisher nicht bekannt.

Um Verbindungsgemische mit Sensoren analysieren zu können, wird vorzugsweise eine Anordnung mehrerer unterschiedlicher Sensoren eingesetzt und deren Kenndaten mit Mustererkennungsverfahren ausgewertet werden. Dieser Vorgang entspricht dem biologischen Vorbild: Gerüche werden über nicht molekülspezifische Rezeptoren in der Nase und nachfolgende Verarbeitung der Reize im Gehirn erkannt.

Erfindungsgemäß werden Mengen von Sensoren auf der Basis gleicher oder unterschiedlicher physikalischchemischer Transduktions-Prinzipien in einem Array angeordnet. Dadurch wird das gasförmige Sicherheitsmerkmal multivariat erfaßt. Weiterhin wird durch Klassifizieren aller Sensorsignale eines endlichen Zeitintervalls in Form einer adaptiven Lernphase mittels neuronaler Netze und fuzzy-logic "echte" und "gefälschte" Sicherheitsmerkmale erlernt.

Jeder Gassensor des Arrays ist für mehrere verschiedene Gase empfindlich, wobei sich die Empfindlichkeitsspektren der einzelnen Sensoren unterscheiden. Jedes Gas, für das die Sensoranordnung empfindlich ist, tritt in mehreren Empfindlichkeitsspektren der Gassensoren auf. Die Verschiedenheit der Empfindlichkeitsspektren kann unterschiedliche Gründe haben. Sie kann darin begründet sein, daß unterschiedliche Sensoren verwendet werden oder daß an sich gleiche Sensoren unterschiedlichen äußeren Einflüssen, wie z.B. Temperaturen, ausgesetzt werden, die ihre Empfindlichkeit beeinflussen. Eine weitere Möglichkeit, die Empfindlichkeit bzw. Selektivität, zu beeinflussen, besteht darin, die Sensoren mit einer gas-selektiven Schicht auszurüsten. Für derartige Meßfühler sind Materialien erforderlich, die - ähnlich wie ein Schloß, das nur auf den genau passenden Schlüssel reagiert - von den nachzuweisenden Molekülen aktiviert werden.

Die Klassifizierung der Gassensoren, welche für eine elektronische Nase zur Echtheitsüberprüfung von Wertdokumenten eingesetzt werden können, beschränkt sich nicht nur auf das eigentliche Sensorelement eines chemischen Gassensors. Dessen Aufgabe besteht darin, die Konzentration des Analytgases in eine proportionale elektrische Größe zu wandeln. Dieser Vorgang läßt sich als Transduktion bezeichnen. Entsprechend den physikalisch-chemischen Änderungen, die aus der Wechselwirkung zwischen der Gaskomponente und der aktiven Meßoberfläche des Sensors resultieren, stehen mehrere Möglichkeiten zur Verfügung. Physisortions-Sensoren nutzen unspezifischen Wechselwirkungen, wobei Chemisorptions-Sensoren auf den charakteristischen Bindungen von Atomen oder Molekülen beruhen, die bei der Adsorption dieser Stoffe an einer Sensoroberfläche entstehen. So läßt sich eine Antikörper/Antigen-Reaktion zur Detektion ausnutzen, z.B. sog.Immuno-Schwingquarze als Sensoreinheit.

Ein bevorzugtes Prüfverfahren für Werterzeugnisse mit erfindungsgemäßen Sicherheitsmerkmal-Stoffen ist die gleichzeitige und an dem gleichen Ort vorgenommene Messung einer oder mehrerer nebeneinander vorliegender gasförmiger Verbindungen mittels eines Sensorsytems. Geeignete Prüfvorrichtungen zur Durchführung dieses Verfahrens sind grundsätzlich bekannt.

Mit geringen Abänderungen und Optimierungen kann ein kommerziell erhältliches Sensorsytem (Elektronische Nase) eingesetzt werden. Hierbei besteht der Prüfkopf (Gassensor-Mikrosysteme) vorzugsweise aus mehreren Metalloxid-Gassensoren.

Die einzelnen Bauelemente dieses Arrays werden für die Anwendung im Sicherheitsbereich vielfältig konditioniert und konfektioniert, insbesondere durch die Verwendung von selektiv durchlässigen Menbranschichten, die den Zugang zum Metalloxid-Leitfähigkeitsdetektor kontrollieren. Vorzugsweise wird als Prüfkopf für das Verfahren auch ein Array, bestehend aus Chemieresistoren auf der Basis leitfähiger Polymere, z.B. Polypyrrol, oder Phathalocyanine, eingesetzt. Eine weitere Möglichkeit für die Detektion der gasförmigen Sicherheitsmerkmal-Stoffe besteht vorzugsweise in der Verwendung von Gassensorarrays auf piezoelektrischer Funktionsweise. Je nach den zu detektierenden Sicherheitsmerkmal-Stoffen kann auch eine Anwendung eines hybriden Sensorarrays erforderlich sein, d.h. unterschiedliche Sensortypen sind im Prüfkopf integriert.

Als Energiequelle zur erzwungenen Freisetzung dient vorzugsweise ein Laser, der gezielt über einen definierten Zeitraum auf lokal auf das Werterzeugnis einwirken kann. Direkt über der lokal aktivierten Stelle des Werterzeugnisses wird der Prüfkopf in Form eines Sensorarrays mit integrierter Auswerteelektronik plaziert, wobei vor und nach der Aktivierung eine Messung durchgeführt wird. Eine weitere Variante ist das definierte Bewegen des Prüfkopfes über das Werterzeugnis und dabei das gleichzeitige Messen der Gaskomponenten.

Im Gegensatz zu handelsüblichen elektronischen Nasen kann bei dem erfindungsgemäßen Verfahren auf eine aufwendige und zeitraubende off-line Probenahme des gasförmigen Sicherheitsmerkmal-Stoffes verzichtet werden, da die in situ Generierung oder die permanente Anwesenheit der dem Anwender bekannten Merkmals-Stoffe ein dynamisches Probensampling mit einer maßgeschneiderten Sensoreinheit ermöglicht.Somit ist ein schnelles Prüfverfahren mit einer "echt/falsch"-Entscheidung vor Ort möglich.

Eine Übersicht der Methoden zur Meßwertwandlung als Klassifizierungsmerkmal für Gassensoren ist in der nachfolgenden Liste enthalten. Eine ausführliche Behandlung von Gassensoren, die in elektronischen Nasen eingesetzt werden können, findet sich in Sensors-A Comprehensive Survey (Hrgs: W. Göpel, J. Hesse, J.N. Zemel, Vol. 2 und 3, VCH Verlagsgesellschaft mbH, Weinheim 1991).

| **SENSORTYP** | **PHYSIK.-CHEM.PROZESS** | **TRANSDUCERSIGNAL** |
|---|---|---|
| Elektrisch Konduktormetrisch | Ladungsänderungen an der Oberfläche oder im Innern eines halbleitenden Festkörpers | Leitfähigkeit des Materials zwischen zwei Elektroden |
| Elektrochem.Amperometrisch | Elektrochem.Reaktionen im konstanten E-Feld d.h. bei angelegtem äußeren Potential | Grenzstrom, gemessen im Plateaubereich der angelegten Spannung |
| Elektrochem.Potentiometrisch | Potentialänderungen an Phasengrenzen durch Ladungsverschiebungen | Potentialdifferenz, an Phasengrenze Probegas/Sensor |
| Optisch | Änderung opt.Eigenschaften des den Sensor umgebenden Mediums, z.B. Lichtintensität, Brechnungsindex | Absorption, Flureszenz, Änderungen der Ausbreitungsgeschwindigkeit von Licht |
| Thermisch | Enthalpieänderungen durch Adsorption oder Adsorbtion d.Analyten mit chem.aktivierter Sensoroberfläche | Messung e.Thermospannung(Seebeckeffekt) od.therm. abhängige Leitfähigkeit e.Leiters, z.B. Metalldraht |
| Gravimetrisch | Masseänderungen durch Adsorption oder Absorbtion des Analyten mit chem.aktivierter Sensoroberfläche | Messung einer Verschiebung der Resonanzfrequenz bei piezo-elektr. Transducern |
| Magnetisch | Wechselwirkung von paramagnetischen Gasen (nahezu ausschl.Sauerstoff) im inhomogenen Magnetfeld | thermonagnetisch magnetopneumatisch (Quincke-Methode) magnetomechanisch |

Aus DE 3519435 A1, DE 3519436 A1, DE 3519397 A1 und DE 4227727 C2 ist es bekannt, Sensoranordnungen mit Mustererkennungsmatrizen zur Gaserkennung zu verwenden. Insbesondere die Bewertung der eingehenden, chemischen Daten mittels sogenannter chemometrischer Methoden hat in jünster Zeit zu interessanten Ansätzen bezüglich der Komponentenerkennung von Sensoren geführt. Anwendungsfelder sind z.B. die Qualitätskontrolle von Aromen (J.W. Gardner, Detection of vapours and odours from a multisensor array using pattern recognition, Sensor and Actuators B,4 (1991), 109-115 und J.W. Gardner, H.V. Sturmer, T.T.Tan, Application of an electronic nose to the discrimination of coffees. Sensors and Actuators B,6 (1992), 71-75 oder Frischekriterien von Lebensmitteln. Für die aufgelisteten Anwendungsfelder sind seit kurzem kommerzielle Systeme (Elektronische Nasen) erhältlich (Firma Neotronics, AromaScan, Alpha MOS), die bislang jedoch keinen Einsatz in der Echtheitsüberprüfung von Wertdokumenten gefunden haben und für diese Anwendung nicht optimiert sind.

Die gasförmige Substanz als erfindungsgemäßes Sicherheitsmerkmal von Wertdokumenten hat folgende Vorteile:

Die Gasemission der bereits bisher zur Herstellung und Druck von Wertdokumenten eingesetzten Materialien kann zur Detektion der gasförmigen Substanz ausgenutzt werden, somit entstehen keine verfahrens- oder materialbedingten Kosten. Der spezielle Geruch der gasförmigen Substanz eines Wertdokumentes ist nicht kopierbar. Das neue Sicherheitsmerkmal hat einen hohen Grad an Fälschungssicherheit. Es bietet eine hochspezifische Erkennungsmöglichkeit und die Möglichkeit einer Systemlösung durch Sicherheitsmerkmal und Detektion, ferner die Erkennung der falschen Duftstoffe kopierter Banknoten anhand der Tonerbestandteile, von gefälschten Dokumenten anhand der Papierbeschaffenheit, dem Duft des Papieres und der Druckfarbe, und somit die Identifizierung von potentiellen Fälschungsquellen, schließlich die sensorische Erkennung der Alterung von Banknoten und die sensorische Erkennung von Veränderungen der Banknoten, z.B. Änderung von Daten durch Beschreiben, Radieren u.dgl.. Insbesondere ist die Maschinenlesbarkeit möglich.

Zu den Wert- und Sicherheitserzeugnissen zählen vor allem nachfolgend aufgeführte Erzeugnisse:
**1. Personalisierte Dokumente:** Ausweise/Pässe, Karten/Laminate, KFZ-Dokumente, Visa/Aufenthaltsbescheinigungen und Zugangskontrolldokumente
**2. Banknoten/Bankerzeugnisse:** Banknoten sowie Teilerzeugnisse von Banknoten, die eine sicherheitstechnische Einheit mit Banknoten darstellen; Substrate von Banknoten; Aktien und sonstige Wertpapiere; Karten und andere Substrate, die zum Einsatz im elektronischen Zahlungsverkehr geeignet sind.
**3. Wertzeichen:** Postwert-, Steuer- und sonstige Wertzeichen
**4. Produktsicherungs-Produkte:** Sicherheitsetiketten, Produktionsprodukte wie Folien, Verschlüsse u.dgl., die zum Zweck des Produkt-Markenschutzes hergestellt werden, insbesondere in den Bereichen Pharma, Kosmetika, Kleidung, Software/Medien.
**5. Weitere Wert- und Sicherheitsprodukte:** Urkunden, Zertifikate, Eintrittskarten/Tickets

Weiterhin zählen alle oben nicht explizit aufgeführten Produkte, die aufgrund ihrer Anwendung eindeutig der Sicherung bzw. dem Schutz vor Reproduktion von Produkten dienen, zum Geltungsbereich Wert- und Sicherheitserzeugnisse.

Das erfindungsgemäße Sicherheitsmerkmal in Form der gasförmig zu delektierenden Substanz kann auch zur Personenerkennung verwendet werden, indem das gasförmige Sicherheitsmerkmal einer Person in medizinisch unbedenklicher (dermaler) Form zugeführt bzw. verabreicht oder in Form eines Stempels oder Etiketts aufqebracht wird, so daß die Person mittels einer elektronischen Nase od.dgl. sicher erkannt werden kann. Dabei muß der menschliche Körper, z.B. die Hand, zusätzlich mit einem Duftstoff zwecks Zugehörigkeit zu einer bestimmten Gruppe von Personen, z.B. einem bestimmten Unternehmen, zur Personenzugangskontrolle, versehen werden. Auch kann dieser Duftstoff auf einem Wertdokument, z.B. dem Ausweis der Person, abgespeichert werden. Dabei ist es bekannt, elektronische Nasen zur Erkennung des natürlichen Handgeruches von Menschen einzusetzen (Bloodbound Sensors Ltd.UK). Hierbei werden jedoch keine zusätzlichen Merkmals-stoffe detektiert.

Die Erfindung ist nachfolgend anhand mehrerer Ausführungsbeispiele von Wertdokumenten mit Sicherheitsmerkmalen näher erläutert. Es zeigen:
- Fig. 1: Eine Banknote mit mehreren Feldern für das Sicherheitsmerkmal,
- Fig. 2: eine Ausweiskarte mit aufgebrachten Sicherheitsmerkmalen in der Draufsicht,
- Fig. 3-8: Querschnitte durch verschiedene Ausführungsformen von Mertdokumenten mit eingebrachtem Sicherheitsmerkmal und
- Fig. 9: eine Übersicht der Sicherheitsmerkmale aus einer gasförmigen Substanz.

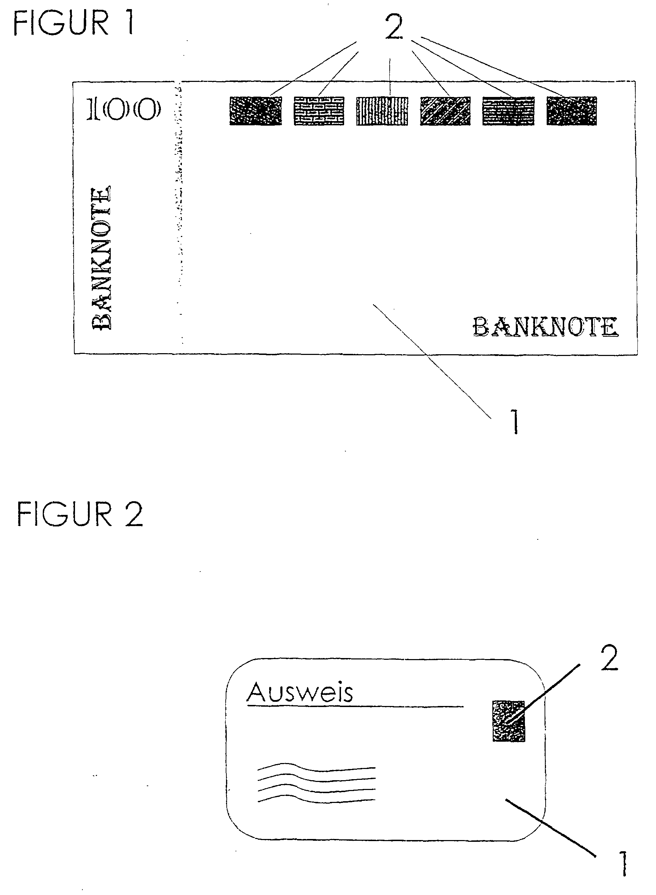

Die Fig. 1 zeigt eine Banknote in Aufsicht mit auf dem Träger 1, d.h. dem Bedruckstoff aufgedruckten Feldern 2 mit dem Zusatz von Sicherheitsmerkmalen in Form einer gasförmig zu detektierenden Substanz. Die Felder 2 können jede geometrische Form und Größe aufweisen. Die Anzahl der Felder 2 ist beliebig und wird nur von die Größe des Wertdokumentes begrenzt. Die Felder 2 mit den Sicherheitsmerkmalen können je nach Art der Aufbringung oder Integration in das Wertdokument visuell sichtbar, vorzugsweise unsichtbar sein. Als Felder 2 können aufgedruckte Schriftzüge, Texte oder Zahlen u. dgl. dienen. Zur Detektion des Sicherheitsmerkmales kann gezielt nur eines der Felder 2 herangezogen werden, aber auch Kombinationen sowie alle Felder 2 gleichzeitig, in dem z.B. durch gezielte Aktivierung, d.h. Energiezufuhr wie z.B. Laserbestrahlung, Zugabe von Chemikalien u.dgl., das Sicherheitsmerkmal im gasförmigen Zustand generiert wird.

Der Träger 1 besteht aus Papier- oder papierähnlichen Stoffen, aber auch aus nicht wegschlagenden Kunststoffen, Folien, Geweben, Membranen oder Polymermaterialien. Die Felder 2 mit den Sicherheitsmerkmalen können auch auf anderen Substraten, Kunststoffkarten, Oberflächen von Gegenständen u.dgl. angebracht werden, wobei sich auch in diesen Fällen die angestrebten Vorteile ergeben.

Das Sicherheitsmerkmal in den Feldern 2 ist Bestandteil oder Zusatz in einem Beschichtungsmaterial, das auf nicht wegschlagende und wegschlagende Bedruckstoffe des Trägers 1 gedruckt ist. Hierbei wird das Sicherheitsmerkmal des oder der Felder 2, d.h. die einzelnen chemischen Komponenten, handelsüblichen oder speziellen Druckfarben, Lacken oder Tonern zugesetzt und kann mit allen Drucktechniken auf den Träger 1 gedruckt werden. Auch der Sicherheitsfaden, der häufig in Banknoten enthalten ist, kann als Feld 2 für das Sicherheitsmerkmal dienen und mit speziellen chemischen Substanzen ausgerüstet werden, die in den gasförmigen Zustand überführbar sind.

Die Fig. 2 zeigt eine Ausweiskarte, auf deren Träger 1 ein Feld 2 mit eingebrachtem Sicherheitsmerkmal vorhanden ist, das sich aus einer oder vorzugsweise mehreren chemischen Komponenten zusammensetzt und in einem Feld 2 enthalten ist, so daß bei kontinuierlicher Herausdiffusion, aber auch durch erzwungene Freisetzung der gasförmigen Substanz das gasförmige Sicherheitsmerkmal gezielt an einer Stelle detektiert werden kann.

Bei den Ausführungsbeispielen gemäß Fig. 1 und Fig. 2 ist gemeinsam, daß für die Detektion des Sicherheitsmerkmales auf dem jeweiligen Feld 2 sowohl die aus den Feldern 2 generierten, als auch von den eingesetzten Basismaterialien des Trägers 1 generierten oder herausdiffundierenden gasförmigen Stoffe herangezogen werden können. Ebenfalls kann das Sicherheitsmerkmal in Feldern 2 auf beiden Seiten des Trägers 1 aufgebracht sein.

Zusätzlich zu den in Fig. 1 und Fig. 2 dargestellten Feldern 2 können auf oder in dem Sicherheitsmerkmal noch weitere Elemente vorhanden sein, beispielsweise Hologramme, Magnetstreifen, optisch variable Elemente, Prägungen, Beschriftungen u.dgl.. Es können auch diese visuell wahrnehmbaren Elemente, wie z.B. Hologramme, derart ausgenutzt werden, daß deren gasförmigen oder erzwungenen Emissionen verwendet werden, z.B. aus UV-härtbaren Lacken.

Das in den Ausführungsbeispielen der Fig. 1 und Fig. 2 auf Feldern 2 angebrachte Sicherheitsmerkmal in Form einer gasförmigen Substanz kann auch in einer Heißklebefolie enthalten sein und mit einer entsprechenden Technik aufgebracht werden,d.h. mittels eines Stempels unter Einwirkung von Druck und Wärme auf die Oberfläche des Trägers 1. Derartige Herstellungsverfahren und Appliziertechniken für derartige Laminierfolien sind allgemein bekannt.

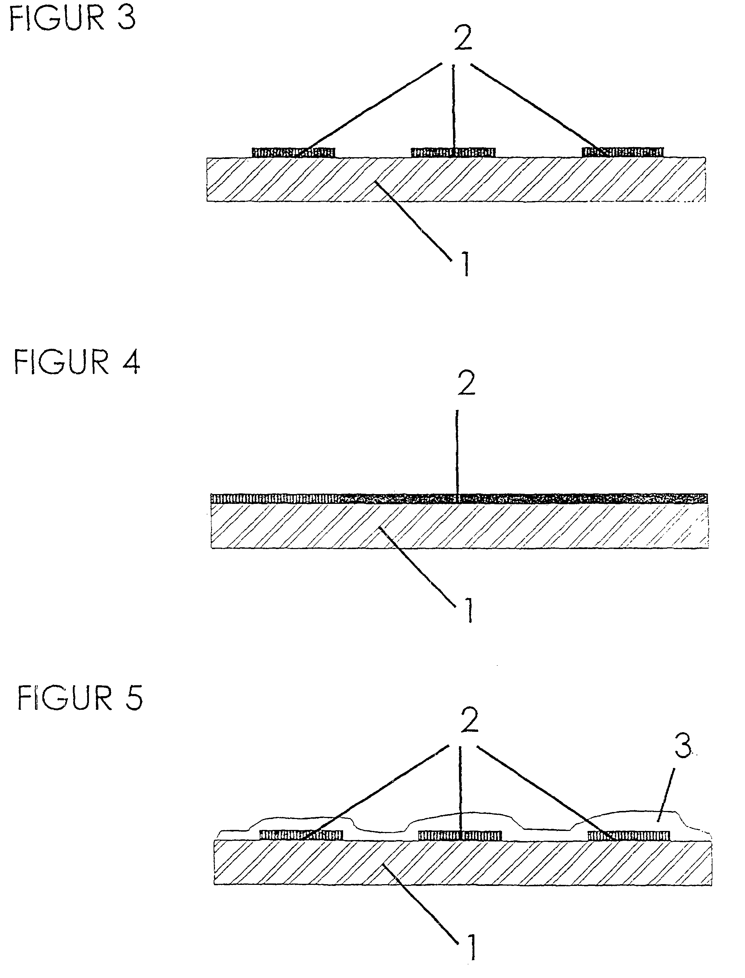

Die Fig. 3 zeigt in einem Querschnitt durch den Träger 1 des Wertdokumentes dessen Schichtaufbau und ferner wie die das Sicherheitsmerkmal enthaltenden Felder 2 teilflächig auf den Träger 1 gedruckt sind. Bei diesem Schichtaufbau werden die Sicherheitsmerkmale der Felder 2 direkt einer Druckfarbe zugesetzt und dann in Form einer dünnen Deckschicht auf den Träger 1 übertragen.

Die Fig. 4 zeigt einen Querschnitt durch ein weiteres Wertdokument und dessen Schichtaufbau, wobei der Träger 1 ganzflächig mit einem Feld 2 für das Sicherheitsmerkmal beschichtet ist. Die ganzflächige Oberflächenausrüstung des Trägers 1 mit dem Feld 2 für das Sicherheitsmerkmal kann bereits bei der Herstellung des Trägers 1 erfolgen, z.B. bei der Papierherstellung. Hierbei können auch mehrere dünne Schichten mit unterschiedlichen Sicherheitsmerkmalen aufeinander aufgetragen werden.

Im Ausführungsbeispiel nach Fig. 5 ist auf den Träger 1 und den darauf befindlichen Feldern 2 mit den Sicherheitsmerkmalen ein transparentes oder farbiges Beschichtungsmaterial 3 aufgebracht, dessen Aushärtung vorzugsweise mit UV-Licht begünstigt wird. Das Beschichtungsmaterial 3 kann ganzflächig auf den Träger 1 in Form einer Klebefolie laminiert werden, aber auch teilflächig auf den Träger 1 appliziert werden. Das Beschichtungsmaterial 3 kann selbst die Funktion einer Diffusionsbarriere ausüben, so daß nur bei gezielter Energiezufuhr gasförmige Komponenten des Sicherheitsmerkmales in Form der gasförmigen Substanz das Beschichtungsmaterial 3 zu durchdringen vermögen oder kontinuierlich eine genau definierte Konzentration des gasförmigen Sicherheitsmerkmales durch das Beschichtungsmaterial 3 abgegeben wird. Hierdurch kann die Lebensdauer, d.h. die Existenz von diffundierenden Substanzen, erhöht werden. Das Beschichtungsmaterial 3 kann ebenso selbst Sicherheitsmerkmale in Form gasförmiger Substanzen enthalten, die selbständig oder durch geeignete Anregung in die Gasphase überführt werden können. Vorzugsweise wird das Beschichtungsmaterial 3 mit bekannten Drucktechniken ganz- oder teilflächig auf den Träger gedruckt.

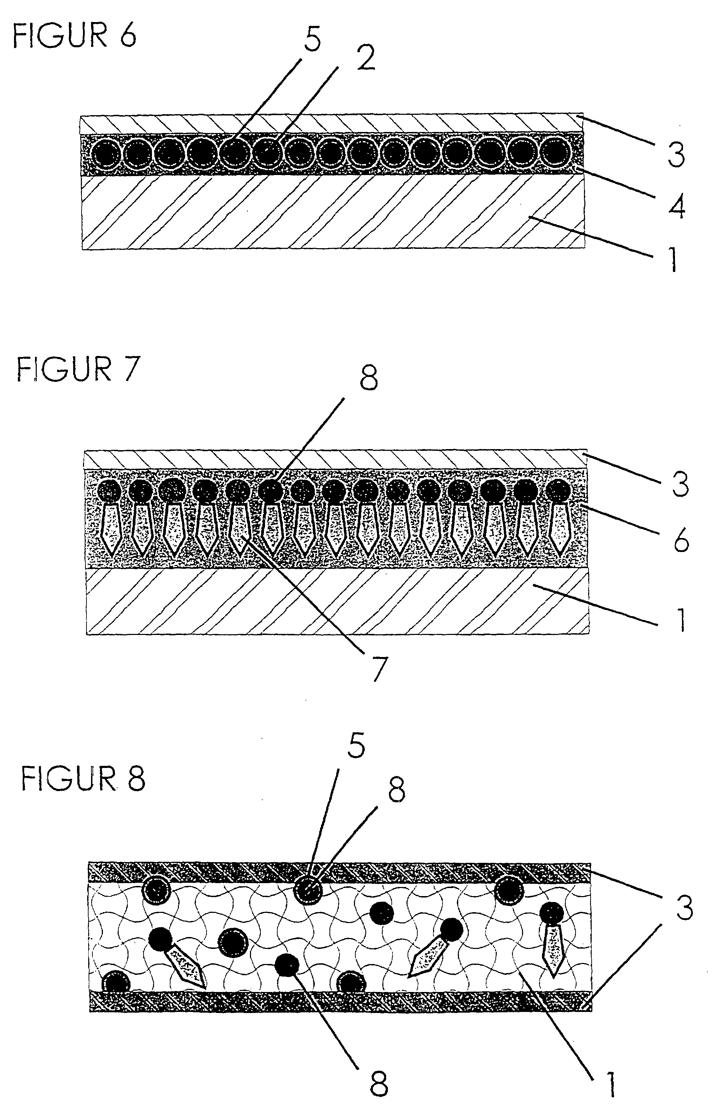

Die Fig. 6 zeigt eine auf den Träger 1 aufgebrachte zusätzliche Schicht 4, in welcher sich Mikrokapseln 5 befinden, welche die Felder 2 bilden und die Sicherheitsmerkmals-Stoffe enthalten oder an welcher sich weitere Substanzen physisorbierte Sicherheitsmerkmals-Stoffe befinden. Die Mikrokapseln 5 mit den Sicherheitsmerkmals-Stoffen oder den an weiteren Substanzen physisorbierten Sicherheitsmerkmals-Stoffen befinden sich innerhalb der Schicht 4 oder auch an der Oberfläche der Schicht 4, die auf das Trägermaterial 1 aufgebracht ist. Die Schicht 4 kann durch ein Beschichtungsmaterial 3 abgedeckt sein.

Durch geeignete Wahl der Schichtdicke der Schicht 4 wird sichergestellt, daß die verkapselten oder physisorbierten Sicherheitsmerkmals-Stoffe bei mechanischer, thermischer u.dgl. Beanspruchung gasförmig freigesetzt und an die Umgebung abgegeben werden. Das Material für die Schicht 4 wird durch den Zusatz von verkapselten oder physisorbierten Sicherheitsmerkmals-Stoffen zu Druckfarben oder zu UV-härtenden Lacken gebildet. Generell können die verkapselten oder physisorbierten Sicherheitsmerkmals-Stoffe einem die Schicht 4 bildenden Beschichtungsmaterial zugesetzt werden, welche durch Trocknung, Polymerisation oder andere chemische Verfahren erhärten. Zusätzlich können in der Schicht 4 auch Abstandshalter, wie z.B. kugelrunde feste Kunstharzkugeln in einem definierten Größenbereich, enthalten sein, die ein Aufbrechen der Mikrokapseln bei Druckverfahren mit hohem Anpreßdruck verhindern, wie z.B. Offset, Buchdruck, Flexodruck u.dgl..

Eine weitere Variante stellt die Ausbildung der Schicht 4 ohne Sicherheitsmerkmals-Stoffe und die darauf anschließende Immobilisierung auf die noch nicht vollständig ausgehärtete Schicht 4 dar, wobei verkapselte oder physisorbierte Sicherheitsmerkmals-Stoffe in einem geeigneten Lösungsmittel auf die Schicht 4 aufgegeben werden.

Die Auftragung der Schicht 4 auf den Träger 1 erfolgt mit konventionellen Drucktechniken. Zusätzlich kann auf der Schicht 4 ein weiteres Beschichtungsmaterial 3 aufgebracht sein, das die im Ausführungsbeispiel nach Fig. 5 genannten Vorteile aufweist. Es können gleichzeitig verkapselte oder physisorbierte Sicherheitsmerkmals-Stoffe nebeneinander mit ganzflächig oder teilflächig aufgebrachten Feldern 2 vorliegen, wie in Fig.3,4 und 5 dargestellt.

Die Fig. 7 zeigt einen stark vergrößerten Querschnitt durch ein Wertdokument, auf dessen Träger 1 eine zusätzliche Schicht 6 aufgebracht ist, in welcher sich Körper 8 mit Sicherheitsmerkmals-Stoffen befinden, welche chemisch kovalent an die Schicht 6 gebunden sind. Die kovalente Verankerung 7 in der Schicht 6 erfolgt durch die Wahl der geeigneten funktionellen Gruppen des Schichtmaterials der Schicht 6 und der Sicherheitsmerkmals-Stoffe und deren chemische Umsetzung oder aber auch a priori bei der Synthese des Schichtmaterials 6.

In einer weiteren, nicht dargestellten Ausführungsform können die Sicherheitsmerkmals-Stoffe auch direkt auf eine geeignete Oberfläche des Trägers 1 chemisch kovalent gebunden werden. Hierbei ist darauf zu achten, daß die kovalenten Bindungen auch ohne Fragmentierung der Sicherheitsmerkmals-Stoffe wieder aufgebrochen werden können. Es können auch Materialien für die Schicht 6 eingesetzt werden, bei denen durch geeignete Aktivierung kovalente Bindungen gespalten und leichtflüchtige, niedermolekulare Verbindungen in der Gasphase abgegeben werden. Es können gleichzeitig chemisch kovalent gebundene, mit verkapselten oder physisorbierten Sicherheitsmerkmals-Stoffen oder mit ganzflächig oder teilflächig aufgebrachten Sicherheitsmerkmals-Stoffen nebeneinander auf einem Träger enthalten sein.

In Fig. 8 ist ein weiterer Schichtaufbau dargestellt, wobei der Träger 1 den Sicherheitsmerkmals-Stoff in reiner Form chemisch kovalent gebunden oder mit verkapselten oder physisorbierten Sicherheitsmerkmals-Stoffen in den Körpern 8 enthält. Zusätzlich kann der Träger 1 von einer oder von beiden Seiten mit einer Beschichtung 3 versehen sein. Die Sicherheitsmerkmals-Stoffe in reiner Form können aus der Gasphase auf und in dem Träger 1, z.B. Papier, eingebracht sein. Der Träger 1 kann mit in einem geeigneten Lösungsmittel gelösten Sicherheitsmerkmal-Stoff imprägniert sein und anschließend mit der Beschichtung 3 versehen sein. Auf diese Weise kann der Sicherheitsmerkmals-Stoff mittels der Körper 2 auch kovalent an eine geeignete Matrix des Trägers 1 gebunden sein.

Schließlich ist es möglich, mit dem Sicherheitsmerkmal ausgerüstete thermoplastische Fasern während des Herstellungsprozesses des Trägers 1, z.B. aus Papier, zwischen die Papierfasern einzuschmelzen. Es ist auch möglich, auf den Träger 1 direkt oder auf eine aufgebrachte Schicht 3 weitere Felder 2 mit Sicherheitsmerkmals-Stoffen aufzudrucken.

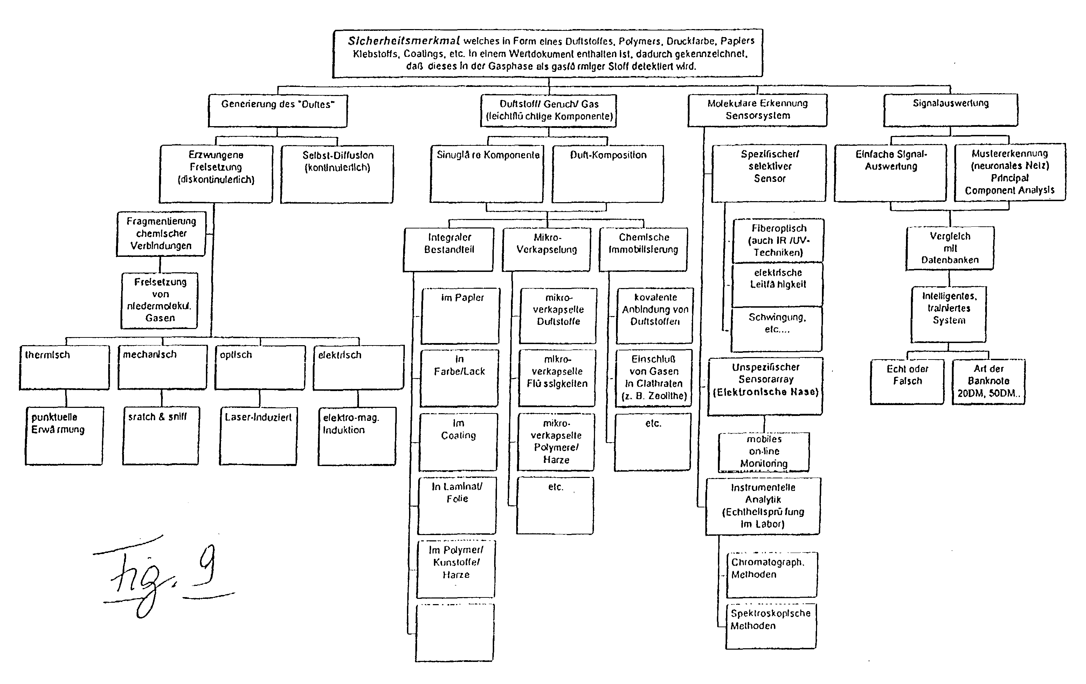

Die Fig. 9 zeigt in einer Tabelle die verschiedenen Möglichkeiten der Aufbringung gasförmiger Substanzen als Sicherheitsmerkmal von Wertdokumenten, deren Generierung und deren Erkennung. Hierbei sind im mittleren Block die verschiedenen Duftstoffe, Gerüche und Gase aufgelistet, die als leichtflüchtige Komponenten, als singuläre Komponenten oder. in Duft-Kompositionen vorliegen können. Diese können als integraler Bestandteil im Papier, in Farbe/Lack, im Coating, in Laminat/Folie oder im Polymer/Kunststoff/Harz des Wertdokumentes vorliegen. Die gasförmige Substanz kann auch mikroverkapselt als Duftstoff, Flüssigkeit oder Polymer/Harz vorhanden sein. Die gasförmige Substanz kann durch chemische Immobilisierung als kovalente Anbindung von Duftstoffen oder als Einschluß von Gasen in (Clathraten, z.B. Zeolithen) vorliegen.

In der linken Spalte der Fig. 9 wird die Generierung des Duftes der gasförmigen Substanz erläutert. Diese kann durch kontinuierliche Selbst-Diffusion oder durch diskontinuierliche, erzwungende Freisetzung erfolgen, wie durch Fragmentierung chemischer Verbindungen, wie Freisetzung niedermolekularer Gase, thermisch, mechanisch, optisch oder elektrisch.

In der rechten Spalte werden die molekulare Erkennung mittels Sensorsystemen und die Signalauswertung erläutert. Die molekulare Erkennung mittels spezifischer/selektiver Sensoren erfolgt auf der Basis z.B. fiber-optischer, IR- und UV-Techniken, elektrischer Leitfähigkeit oder Schwingungen. Die molekulare Erkennung kann auch durch aus unspezifizierten Sensoren zusammengesetzten Sensorarrays, z.B. eine elektronische Nase, durch mobiles On-Line Monitoring erfolgen. Ferner erfolgt auch eine instrumentelle Analytik in Form einer Echtheitsprüfung im Labor, mittels gaschromatografischer oder spektroskopischer Methoden.

Schließlich kann die Signalauswertung in einfacher Signalauswertung oder Mustererkennung, z.B. durch Vergleich mit Datenbanken über ein intelligentes, trainiertes System ermitteln, ob das Wertdokument echt oder falsch ist und welcher Art dieses ist, z.B. welche Wertigkeit es hat.

## Patentansprüche

1. Werterzeugnis und/oder Sicherheitserzeugnis mit mindestens einer in das Werterzeugnis und/oder Sicherheitserzeugnis eingebrachten oder auf das Werterzeugnis und/oder Sicherheitserzeugnis aufgebrachten Primärsubstanz,
**dadurch gekennzeichnet,**
**daß** die Primärsubstanz im festen oder im flüssigen oder im gasförmigen Zustand vorliegt und durch gezielte Energiezufuhr zersetzt oder unzersetzt mindestens teilweise in eine gasförmige Sekundärsubstanz überführbar und/oder mindestens teilweise als gasförmige Sekundärsubstanz freisetzbar ist, wobei mindestens ein Teil der Sekundärsubstanz als Sicherheitsmerkmal analysierbar ist.

2. Werterzeugnis und/oder Sicherheitserzeugnis nach Anspruch 1, **dadurch gekennzeichnet, daß** die Primärsubstanz in mindestens einem Bestandteil in oder auf dem Werterzeugnis und/oder Sicherheitserzeugnis enthalten ist oder daß die Primärsubstanz kovalent an eine Substanz eines Bestandteils in oder auf dem Werterzeugnis und/oder Sicherheitserzeugnis gebunden vorliegt.

3. Werterzeugnis und/oder Sicherheitserzeugnis nach Anspruch 1 oder 2, **dadurch gekennzeichnet, daß** die Primärsubstanz eingeschlossen in einer Mikroverkapselung oder in molekularen Käfigverbindungen oder in supramolekularen Verbindungen oder in einem porösen Trägermaterial enthalten ist, wobei die Mikroverkapselung oder die molekularen Käfigverbindungen oder die supramolekularen Verbindungen oder das poröse Trägermaterial in mindestens einem Bestandteil in oder auf dem Werterzeugnis enthalten ist.

4. Werterzeugnis und/oder Sicherheitserzeugnis nach Anspruch 2 oder 3, **dadurch gekennzeichnet, daß** die Bestandteile des Werterzeugnisses und/oder Sicherheitserzeugnisses vorzugsweise das Papier, die Druckfarbe, der Lack, der Toner, das Coating, das Laminat, die Folie, das Polymer, der Kunststoff, das Harz, das Beschichtungsmaterial bilden.

5. Werterzeugnis und/oder Sicherheitserzeugnis nach Anspruch 1, **dadurch gekennzeichnet, daß** die Primärsubstanz aus einer chemischen Verbindung oder aus einem Gemisch chemischer Verbindungen besteht.

6. Werterzeugnis und/oder Sicherheitserzeugnis nach Anspruch 1, **dadurch gekennzeichnet, daß** die Sekundärsubstanz aus einer chemischen Verbindung oder aus einem Gemisch chemischer Verbindungen besteht.

7. Werterzeugnis und/oder Sicherheitserzeugnis nach Anspruch 5 oder 6, **dadurch gekennzeichnet, daß** das Gemisch quantitativ und/oder qualitativ charakteristisch für die jeweilige Anwendung zusammengestellt ist.

8. Werterzeugnis und/oder Sicherheitserzeugnis nach Anspruch 1, **dadurch gekennzeichnet, daß** die Sekundärsubstanz mittels mikrobieller oder bakterieller Prozesse auf dem Werterzeugnis und/oder Sicherheitserzeugnis generierbar ist.

9. Werterzeugnis und/oder Sicherheitserzeugnis nach Anspruch 1, **dadurch gekennzeichnet, daß** die Primärsubstanz kontinuierlich oder diskontinuierlich in die Sekundärsubstanz überführbar und/oder die Sekundärsubstanz kontinuierlich oder diskontinuierlich freisetzbar ist.

10. Werterzeugnis und/oder Sicherheitserzeugnis nach Anspruch 1, **dadurch gekennzeichnet, daß** in oder auf dem Werterzeugnis und/oder Sicherheitserzeugnis weitere Sicherheitsmerkmale angeordnet sind.

11. Verfahren zur Analyse von Sicherheitsmerkmalen eines Werterzeugnisses und/oder eines Sicherheitserzeugnisses, **dadurch gekennzeichnet,**
**daß** eine in das Werterzeugnis und/oder Sicherheitserzeugnis eingebrachte oder auf das Werterzeugnis und/oder Sicherheitserzeugnis aufgebrachte feste oder flüssige oder gasförmige Primärsubstanz durch gezielte Energiezufuhr zersetzt oder unzersetzt mindestens teilweise in eine gasförmige Sekundärsubstanz überführt und/oder mindestens teilweise als gasförmige Sekundärsubstanz freigesetzt wird und mindestens ein Teil der Sekundärsubstanz anschließend als Sicherheitsmerkmal analysiert wird.

12. Verfahren nach Anspruch 11, **dadurch gekennzeichnet, daß** die Primärsubstanz aus einem Gemisch chemischer Verbindungen besteht.

13. Verfahren nach Anspruch 11, **dadurch gekennzeichnet, daß** die' Sekundärsubstanz aus einem Gemisch chemischer Verbindungen besteht.

14. Verfahren nach Anspruch 11, **dadurch gekennzeichnet, daß** die Analyse des mindestens einen Teils der Sekundärsubstanz mittels eines Gassensorsystems, vorzugsweise einer elektronischen Nase erfolgt, wobei durch das Gassensorsystem nach der Analyse des mindestens einen Teils der Sekundärsubstanz mindestens ein Teil des Analyseergebnisses in elektrische Signale umgewandelt wird.

15. Verfahren nach Anspruch 14, **dadurch gekennzeichnet, daß** das Gassensorsystem einen Sensor, der auf der Basis physikalischer und/oder chemischer Analyseprinzipien arbeitet, oder eine in einem Array angeordnete Vielzahl von Sensoren enthält, die auf der Basis gleicher oder unterschiedlicher physikalischer und/oder chemischer Analyseprinzipien arbeiten, wobei jeder Sensor eine Analyse des Sicherheitsmerkmals vornimmt.

16. Verfahren nach Anspruch 15, **dadurch gekennzeichnet, daß** als Analyseprinzipien die Ladungsänderung an der Oberfläche oder im Innern eines halbleitenden Festkörpers und/oder die elektrochemische Reaktion oder die Potentialänderung an Phasengrenzen durch Ladungsverschiebungen und/oder die Änderung optischer Eigenschaften und/oder die Enthalpie- oder Masseänderungen durch Adsorption oder Absorption und/oder die Wechselwirkungen im inhomogenen Magnetfeld verwendet werden.

17. Verfahren nach Anspruch 15, **dadurch gekennzeichnet, daß** mindestens ein Sensor mit einer gas-selektiven Schicht versehen ist.

18. Verfahren nach Anspruch 11, **dadurch gekennzeichnet, daß** die Analyse des mindestens einen Teils der Sekundärsubstanz mittels eines Gaschromatographen oder mittels eines spektroskopischen Meßsystems, beispielsweise mittels eines Massenspektrometers, erfolgt, wobei durch den Gaschromatographen oder das spektroskopische Meßsystem nach der Analyse des mindestens einen Teils der Sekundärsubstanz mindestens ein Teil des Analyseergebnisses in elektrische Signale umgewandelt wird.

19. Verfahren nach Anspruch 14 oder 18, **dadurch gekennzeichnet, daß** mindestens ein Teil der elektrischen Signale derart ausgewertet wird, daß die Signale mit Eintragungen in einer Datenbank verglichen werden und anhand des Ergebnisses des Vergleichs entschieden wird, ob das Werterzeugnis und/oder Sicherheitserzeugnis echt oder falsch ist und/oder welche Wertigkeit dieses hat.

20. Verfahren nach Anspruch 11, **dadurch gekennzeichnet, daß** die gezielte Energiezufuhr lokal begrenzt auf dem Werterzeugnis und/oder Sicherheitserzeugnis erfolgt.

21. Verfahren nach Anspruch 11, **dadurch gekennzeichnet, daß** die Energiezufuhr über ein elektromagnetisches Feld und/oder elektromagnetische Strahlung, beispielsweise Laserstrahlung, und/oder mechanisches Reiben und/oder Erwärmung und/oder eine chemische Umsetzung durch Zugabe chemischer Reagenzien erfolgt

22. Verfahren nach Anspruch 11, **dadurch gekennzeichnet, daß** nur bei Erreichen einer bestimmten, fest vorgegebenen Energieschwelle die Freisetzung der gasförmigen Sekundärsubstanz und/oder die Überführung in die gasförmige Sekundärsubstanz.

## Claims

1. Value product and/or security product with at least one primary substance incorporated in the value produce and/or security product or applied to the value product and/or security product, **characterized in that** the primary substance is present in the solid or in the liquid or in the gaseous state and, by the deliberate supply of energy, can at least partially be transformed, in decomposed or undecomposed form, into a gaseous secondary substance and/or can at least partially be liberated as a gaseous secondary substance, it being possible for at least some of the secondary substance to be analyzed as a security feature.

2. Value product and/or security product according to Claim 1, **characterized in that** the primary substance is contained in at least one constituent part in or on the value product and/or security product, or **in that** the primary substance is bound covalently to a substance belonging to a constituent part in or on the value product and/or security product.

3. Value product and/or security product according to Claim 1 or 2, **characterized in that** the primary substance is included in a microencapsulation or in molecular cage compounds or in supramolecular compounds or in a porous carrier material, the microencapsulation or the molecular cage compounds or the supramolecular compounds or the porous carrier material being contained in at least one constituent part in or on the value product.

4. Value product and/or security product according to Claim 2 or 3, **characterized in that** the constituent parts of the value product and/or security product preferably form the paper, the printing ink, the varnish, the toner, the coating, the laminate, the film, the polymer, the plastic, the resin, the coating material.

5. Value product and/or security product according to Claim 1, **characterized in that** the primary substance consists of a chemical compound or of a mixture of chemical compounds.

6. Value product and/or security product according to Claim 1, **characterized in that** the secondary substance consists of a chemical compound or of a mixture of chemical compounds.

7. Value product and/or security product according to Claim 5 or 6, **characterized in that** the mixture is composed quantitatively and/or qualitatively characteristically for the respective application.

8. Value product and/or security product according to Claim 1, **characterized in that** the secondary substance can be generated by means of microbial or bacterial processes on the value product and/or security product.

9. Value product and/or security product according to Claim 1, **characterized in that** the primary substance can be transformed continuously or discontinuously into the secondary substance and/or the secondary substance can be liberated continuously or discontinuously.

10. Value product and/or security product according to Claim 1, **characterized in that** further security features are arranged in or on the value product and/or security product.

11. Method for the analysis of security features belonging to a value product and/or a security product, **characterized in that** a solid or liquid or gaseous primary substance incorporated in the value product and/or security product or applied to the value product and/or security product can be transformed, by the deliberate supply of energy, at least partially, in decomposed or undecomposed form, into a gaseous secondary substance and/or can at least partially be liberated as a gaseous secondary substance, and at least some of the secondary substance is then analayzed as a security feature.

12. Method according to Claim 11, **characterized in that** the primary substance consists of a mixture of chemical compounds.

13. Method according to Claim 11, **characterized in that** the secondary substance consists of a mixture of chemical compounds.

14. Method according to Claim 11, **characterized in that** the analysis of the at least some of the secondary substance is carried out by means of a gas sensor system, preferably an electronic nose, the gas sensor system, after the analysis of the at least some of the secondary substance, converting at least part of the analysis result into electrical signals.

15. Method according to Claim 14, **characterized in that** the gas sensor system contains a sensor which operates on the basis of physical and/or chemical analysis principles, or a large number of sensors arranged in an array, which operate on the basis of identical or different physical and/or chemical analysis principles, each sensor performing an analysis of the security feature.

16. Method according to Claim 15, **characterized in that** the analysis principles used are the change in charge on the surface or in the interior of a semiconducting solid body and/or the electrochemical reaction or the change in potential at phase boundaries as a result of charge displacements and/or the change in optical properties and/or the enthalpy or mass changes arising from adsorption or absorption and/or the interactions in the inhomogenous magnetic field.

17. Method according to Claim 15, **characterized in that** at least one sensor is provided with a gas-selective layer.

18. Method according to Claim 11, **characterized in that** the analysis of the at least some of the secondary substance is carried out by means of a gas chromatograph or by means of a spectroscopic measuring system, for example by means of a mass spectrometer, the gas chromatograph or the spectroscopic measuring system, after the analysis of the at least some of the secondary substance, converting at least part of the analysis result into electrical signals.

19. Method according to Claim 14 or 18, **characterized in that** at least part of the electrical signals is evaluated in such a way that the signals are compared with entries in a database and, by using the result of the comparison, a decision is made as to whether the value product and/or security product is authentic or counterfeit and/or what value this product has.

20. Method according to Claim 11, **characterized in that** the deliberate supply of energy is carried out in a locally limited manner on the value product and/or security product.

21. Method according to Claim 11, **characterized in that** the supply of energy is carried out via an electromagnetic field and/or electromagnetic radiation, for example laser radiation, and/or mechanical rubbing and/or heating and/or a chemical conversion resulting from the addition of chemical reagents.

22. Method according to Claim 11, **characterized in that** the liberation of the gaseous secondary substance and/or the transformation into the gaseous secondary substance take place only when a specific, permanently predefined energy threshold is reached.

## Revendications

1. Produit de valeur et/ou de sécurité comportant au moins une substance primaire introduite dans le produit de valeur et/ou de sécurité ou appliquée sur le produit de valeur et/ou de sécurité,
**caractérisé en ce que**
la substance primaire est présente à l'état solide ou liquide ou gazeux et se décompose ou se transforme, non décomposée, au moins partiellement en une substance secondaire gazeuse, par apport commandé d'énergie, et/ou est libérée au moins en partie sous forme de substance secondaire gazeuse, au moins une partie de la substance secondaire pouvant s'analyser comme une caractéristique de sécurité.

2. Produit de valeur et/ou de sécurité selon la revendication 1,
**caractérisé en ce que**
la substance primaire est contenue dans au moins un composant dans ou sur le produit de valeur et/ou de sécurité ou la substance primaire est reliée de manière covalente à une substance d'un composant dans ou sur le produit de valeur et/ou de sécurité.

3. Produit de valeur et/ou de sécurité selon l'une quelconque des revendications 1 ou 2,
**caractérisé en ce que**
la substance primaire est incluse dans des microcapsules ou dans des liaisons en cages moléculaires ou dans des liaisons supramoléculaires ou en un matériau de support poreux, et le micro-encapsulage ou les liaisons moléculaires en cages ou les liaisons supramoléculaires ou la matière de support poreuse sont contenus dans au moins un constituant dans ou sur le produit.

4. Produit de valeur et/ou de sécurité selon les revendications 2 ou 3,
**caractérisé en ce que**
les composants du produit de valeur et/ou de sécurité sont de préférence du papier, une encre d'impression, un vernis, du toner, un revêtement, un laminé, une feuille, un polymère, une matière plastique, une résine, une matière de revêtement.

5. Produit de valeur et/ou de sécurité selon la revendication 1,
**caractérisé en ce que**
la substance primaire est formée d'une composition chimique ou d'un mélange de compositions chimiques.

6. Produit de valeur et/ou de sécurité selon la revendication 1,
**caractérisé en ce que**
la substance secondaire se compose d'une liaison chimique ou d'un mélange de liaisons chimiques.

7. Produit de valeur et/ou de sécurité selon l'une quelconque des revendications 5 ou 6,
**caractérisé en ce que**
le mélange se compose quantitativement et/ou qualitativement, de manière caractéristique pour chaque application.

8. Produit de valeur et/ou de sécurité selon la revendication 1,
**caractérisé en ce que**
la substance secondaire est générée par des procédés microbiens ou bactériens sur le produit de valeur et/ou de sécurité.

9. Produit de valeur et/ou de sécurité selon la revendication 1,
**caractérisé en ce que**
la substance primaire est transférée en continu ou en discontinu dans la substance secondaire et/ou la substance secondaire est libérée en continu ou de manière discontinue.

10. Produit de valeur et/ou de sécurité selon la revendication 1,
**caractérisé en ce que**
d'autres caractéristiques de sécurité sont prévues dans ou sur le produit de valeur et/ou de sécurité.

11. Procédé d'analyse de caractéristiques de sécurité d'un produit de valeur et/ou de sécurité,
**caractérisé en ce que**
par un apport commandé d'énergie, une substance primaire solide, liquide ou gazeuse, introduite dans le produit de valeur et/ou de sécurité ou appliquée sur le produit de valeur et/ou de sécurité est décomposée ou transformée, au moins en partie en une substance secondaire à l'état gazeux, et/ou on libère au moins une partie sous forme de substance secondaire gazeuse, et au moins une partie de la substance secondaire est ensuite analysée comme caractéristique de sécurité.

12. Procédé selon la revendication 11,
**caractérisé en ce que**
la substance primaire est formée d'un mélange de combinaisons chimiques.

13. Procédé selon la revendication 11,
**caractérisé en ce que**
la substance secondaire est formée d'un mélange de composés chimiques.

14. Procédé selon la revendication 11,
**caractérisé en ce que**
l'analyse d'au moins une partie de la substance secondaire se fait à l'aide d'un système de capteur de gaz, notamment d'un nez électronique et ce système de capteur de gaz, après l'analyse d'au moins une partie de la substance secondaire transforme en signaux électriques au moins une partie du résultat de l'analyse.

15. Procédé selon la revendication 14,
**caractérisé en ce que**
le système de capteur de gaz comprend un capteur fonctionnant sur la base de principes d'analyses physiques et/ou chimiques, ou comporte un grand nombre de capteurs répartis sous la forme d'un réseau et qui travaillent sur la base de principes d'analyses physiques et/ou chimiques identiques ou différents, chaque capteur effectuant une analyse de la caractéristique de sécurité.

16. Procédé selon la revendication 15,
**caractérisé en ce que**
comme principes d'analyse on utilise la variation de charge à la surface ou à l'intérieur d'un corps solide semi-conducteur, et/ou la réaction électrochimique ou la variation de potentiel aux limites des phases par décalage de charge, et/ou la variation d'une propriété optique et/ou la variation d'enthalpie ou de masse par adsorption ou absorption, et/ou des effets d'échanges dans le champ magnétique non homogène.

17. Procédé selon la revendication 15,
**caractérisé en ce qu'**
au moins un capteur est muni d'une couche sélective vis-à-vis des gaz.

18. Procédé selon la revendication 11,
**caractérisé en ce que**
l'analyse d'au moins une partie de la substance secondaire se fait par chromatographie gazeuse ou à l'aide d'un système de mesure spectroscopique, par exemple à l'aide d'un spectromètre de masse, transformant au moins une partie du résultat d'analyse en signaux électriques, par chromatographie gazeuse ou par le système de mesure spectroscopique, après l'analyse d'au moins une partie de la substance secondaire.

19. Procédé selon au moins l'une quelconque des revendications 14 ou 18,
**caractérisé en ce qu'**
au moins une partie des signaux électriques est exploitée par comparaison des signaux avec des enregistrements d'une base de données, et à l'aide des résultats de la comparaison on décide si le produit de valeur et/ou de sécurité est vrai ou faux et/ou la valeur qu'il possède.

20. Procédé selon la revendication 11,
**caractérisé en ce que**
l'apport commandé d'énergie est localement limité sur le produit de valeur et/ou de sécurité.

21. Procédé selon la revendication 11,
**caractérisé en ce que**
l'apport d'énergie se fait par un champ électromagnétique et/ou un rayonnement électromagnétique, par exemple un rayonnement laser et/ou par frottement mécanique et/ou échauffement de la température et/ou transformation chimique par addition de réactif chimique.

22. Procédé selon la revendication 11,
**caractérisé en ce que**
ce n'est que lorsqu'on atteint un seuil d'énergie déterminé, donné de manière fixe, que se produit la libération de la substance secondaire à l'état gazeux et/ou le transfert de la substance secondaire à l'état gazeux.
